# EUROPEAN PATENT APPLICATION

(11) **EP 3 690 759 A1**
(43) Date of publication of application: **05.08.2020**
(21) Application number: 20153459.1
(22) Date of filing: 23.01.2020
(51) Int. Cl.: G06N 5/02, G06N 20/10, G06K 9/62

(54) **METHOD AND APPARATUS FOR CONSTRUCTING DATA MODEL, AND MEDIUM**

(30) Priority: 01.02.2019 CN 201910105197
(71) Applicant: Beijing Baidu Netcom Science and Technology Co., Ltd., Beijing 100085 (CN)
(72) Inventor: WANG, Zhaoyu, Beijing, 100085 (CN); SHI, Yabing, Beijing, 100085 (CN); LIANG, Haijin, Beijing, 100085 (CN); JIANG, Ye, Beijing, 100085 (CN); ZHANG, Yang, Beijing, 100085 (CN); ZHU, Yong, Beijing, 100085 (CN)
(74) Representative: advotec.

(57) **Abstract**

Embodiments of the present disclosure relate to a method, an apparatus and a device for constructing a data model, and a medium. The method for constructing the data model includes obtaining (210) a first attribute set associated with an entity type. The method further includes aligning (220) a plurality of attributes with a same semantics in the first attribute set to a same attribute, to generate a second attribute set associated with the entity type, attributes in the second attribute set having different semantics. The method further includes constructing (230) the data model associated with the entity type based on the entity type and the second attribute set. Embodiments of the present disclosure may identify synonyms attributes with different expressions in data from different sources. Embodiments of the present disclosure may efficiently construct the data model while effectively reducing labor costs.

## Description

### FIELD

Embodiments of the present disclosure relate to a field of a computer, and more particularly to a method and an apparatus for constructing a data model, and a computer readable storage medium.

### BACKGROUND

A knowledge graph is also called as a knowledge base, and is used to describe entities and conceptions existing in a real world, relations between the entities and the conceptions, and attributes of the respective entities and conceptions. Presently, the knowledge graph is widely used in a field such as query, artificial intelligence, depth learning. In the knowledge graph, a schema is used to describe a data model in a certain field, and the data model includes an entity type and attributes associated with the entity type in the field. For example, taking an entity type "character" as an example, the attributes of the entity type "character" may include height, weight, age, etc. The "attribute" described herein may also be called as "predicate.

In order to construct a schema of a certain field, there is a need to mine and to generalize attributes associated with the entity type from data coming from different sources. However, due to multi-source heterogeneous of data and diversity of expressions, expressions for mining the attributes may be complex and diversiform.

### SUMMARY

According to exemplary embodiments of the present disclosure, a technical solution for constructing a data model is provided.

In embodiments of the present disclosure, there is provided a method for constructing a data model. The method includes obtaining a first attribute set associated with an entity type. The method further includes aligning a plurality of attributes with a same semantics in the first attribute set to a same attribute, to generate a second attribute set associated with the entity type, attributes in the second attribute set having different semantics. The method further includes constructing the data model associated with the entity type based on the entity type and the second attribute set.

In an embodiment, obtaining the first attribute set associated with the entity type may include: obtaining a third attribute set associated with the entity type; dividing the third attribute set into a plurality of subsets based on an attribute similarity; and determining one of the plurality of subsets as the first attribute set.

In an embodiment, dividing the third attribute set into the plurality of subsets may include: performing clustering on the third attribute set, to divide the third attribute set into the plurality of subsets.

In an embodiment, aligning the plurality of attributes with the same semantics in the first attribute set to the same attribute may include: combining the entity type with a first attribute in the first attribute set, to obtain a first type-attribute pair; combining the entity type with a second attribute different from the first attribute in the first attribute set, to obtain a second type-attribute pair; determining whether the first type-attribute pair has a same semantics with the second type-attribute pair; and aligning the first attribute to the second attribute in response to determining that the first type-attribute pair has the same semantics as the second type-attribute pair.

In an embodiment, determining whether the first type-attribute pair has the same semantics as the second type-attribute pair may include: extracting a plurality of similarity characteristics between the first type-attribute pair and the second type-attribute pair; and determining whether the first type-attribute pair has the same semantics with the second type-attribute pair based on the plurality of similarity characteristics.

In an embodiment, the plurality of similarity characteristics may include at least one of: a first similarity characteristic indicating a text similarity between the first type-attribute pair and the second type-attribute pair; a second similarity characteristic indicating whether the first type-attribute pair and the second type-attribute pair are synonyms in a semantic dictionary; a third similarity characteristic indicating a semantic similarity between the first type-attribute pair and the second type-attribute pair; and a fourth similarity characteristic obtained by performing a statistical analysis on a first group of knowledge items associated with the first type-attribute pair and a second group of knowledge items associated with the second type-attribute pair.

In an embodiment, determining whether the first type-attribute pair has the same semantics as the second type-attribute pair may include: utilizing a classification model to determine whether the first type-attribute pair has the same semantics as the second type-attribute pair.

In an embodiment, the classification model is a trained support vector machine (SVM) model.

In embodiments of the present disclosure, there is provided an apparatus for construct a data model. The apparatus includes: an attribute obtaining module, an attribute aligning module and a model constructing module. The attribute obtaining module is configured to obtain a first attribute set associated with an entity type. The attribute aligning module is configured to align a plurality of attributes with a same semantics in the first attribute set to a same attribute, to generate a second attribute set associated with the entity type, attributes in the second attribute set having different semantics. The model constructing module is configured to construct the data model associated with the entity type based on the entity type and the second attribute set.

In an embodiment, the attribute obtaining module may include: an attribute obtaining unit, configured to obtain a third attribute set associated with the entity type; a subset dividing unit, configured to divide the third attribute set into a plurality of subsets based on an attribute similarity; and a first determining unit, configured to determine one of the plurality of subsets as the first attribute set.

In an embodiment, the subset dividing unit is further configured to: perform cluster on the third attribute set, to divide the third attribute set into the plurality of subsets.

In an embodiment, the attribute aligning module may include: a first combining unit, configured to combine the entity type with a first attribute in the first attribute set, to obtain a first type-attribute pair; a second combining unit, configured to combine the entity type with a second attribute different from the first attribute in the first attribute set, to obtain a second type-attribute pair; a second determining unit, configured to determine whether the first type-attribute pair has a same semantics with the second type-attribute pair; and an attribute aligning unit, configured to align the first attribute to the second attribute in response to determining that the first type-attribute pair has the same semantics as the second type-attribute pair.

In an embodiment, the second determining unit is further configured to: extract a plurality of similarity characteristics between the first type-attribute pair and the second type-attribute pair; and determine whether the first type-attribute pair has the same semantics with the second type attribute-pair based on the plurality of similarity characteristics.

In an embodiment, the plurality of similarity characteristics may include at least one of: a first similarity characteristic indicating a text similarity between the first type-attribute pair and the second type-attribute pair; a second similarity characteristic indicating whether the first type-attribute pair and the second type-attribute pair are synonyms in a semantic dictionary; a third similarity characteristic indicating a semantic similarity between the first type-attribute pair and the second type-attribute pair; and a fourth similarity characteristic obtained by performing a statistical analysis on a first group of knowledge items associated with the first type-attribute pair and a second group of knowledge items associated with the second type-attribute pair.

In embodiments of the present disclosure, there is provided a computer readable storage medium having computer programs stored thereon. When the computer programs are executed by a processor, the method according to the first aspect of the present disclosure is implemented.

It should be understood that, descriptions in Summary of the present disclosure are not intended to limit an essential or important feature in embodiments of the present disclosure, and are also not construed to limit the scope of the present disclosure. Other features of the present disclosure will be easily understood by following descriptions.

### BRIEF DESCRIPTION OF THE DRAWINGS

The above and other features, advantages and aspects of respective embodiments of the present disclosure will become more apparent with reference to accompanying drawings and following detailed illustrations. In the accompanying drawings, the same or similar numeral references represent the same or similar elements, in which:
FIG. 1 is a block diagram illustrating an exemplary system according to embodiments of the present disclosure;
FIG. 2 is a flow chart illustrating a method for constructing a data model according to embodiments of the present disclosure;
FIG. 3 is a block diagram illustrating an exemplary module for determining whether a first type-attribute pair has a same semantics as a second type-attribute pair according to embodiments of the present disclosure;
FIG. 4 is a block diagram illustrating an apparatus for constructing a data model according to embodiments of the present disclosure; and
FIG. 5 is a block diagram illustrating a computing device for implementing embodiments of the present disclosure.

### DETAILED DESCRIPTION

Description will be made in detail below to embodiments of the present disclosure with reference to accompanying drawings. Some embodiments of the present disclosure are illustrated in the accompanying drawings. It should be understood that, embodiments of the present disclosure may be implemented by various ways, but not be construed as a limitation of the embodiments herein. On the contrary, those embodiments provided are merely for a more thorough and complete understanding of embodiments of the present disclosure. It should be understood that, the accompanying drawings and embodiments of the present disclosure are merely for exemplary purposes, but is not meant to limit the protection scope of the present disclosure.

In the description of embodiments of the present disclosure, the terms "includes" and its equivalents like should be understood as an open "include", that is, "include but not limited to". The terms "based on" should be understood as "based at least in part (at least partially based on or at least part based on)". The terms "an embodiment" or "the embodiment" should be understood as "at least one embodiment". The terms "first", "second" and the like may represent different or same objects. Other explicit and implicit definitions may also be included below.

As described above, in order to construct a knowledge graph of a certain field, a schema needs to be constructed under the field. Therefore, there is a need to mine and to generalize attributes associated with an entity type from data coming from different sources. However, due to multi-source heterogeneous of data and diversity of expressions, the expressions for mining the attribute may be complex and diversiform.

Some conventional solutions perform edition on the attributes associated with the entity type in the schema manually, thus implementing to construct the schema. These conventional solutions have low efficiency and may not adapt to situations with large amounts of data and diverse expressions. Some conventional solutions may mine and refine an attribute set associated with the entity type from large data by utilizing a machine learning model. However, characteristics used in such conventional solutions are relatively single, causing poor robustness and low accuracy.

According to embodiments of the present disclosure, a technical solution for constructing a data model is provided. The technical solution identifies synonyms attributes with different expressions in data coming from different sources by utilizing the machine learning model. Since a procedure for determining the synonyms attributes utilizes rich characteristics in various dimensions, the technical solution may achieve higher robustness and higher accuracy. By aligning the synonyms attributes automatically, the technical solution may construct the data model efficiently while effectively reducing labor costs.

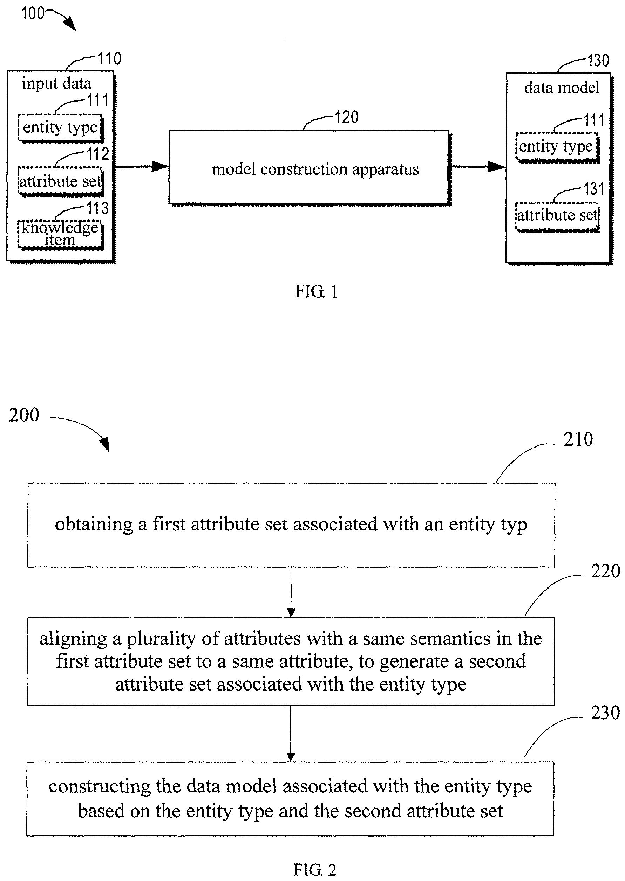

Detailed descriptions will be made to embodiments of the present disclosure with reference to accompanying drawings. FIG. 1 is a block diagram illustrating an exemplary system 100 according to embodiments of the present disclosure. As illustrated in FIG. 1, the exemplary system 100 may include a model construction apparatus 120. It should be understood that, FIG. 1 only describes structure and functions of the exemplary system 100 for exemplary purposes, and does not imply any limitation on the scope of the present disclosure. Embodiments of the present disclosure may also be applied to an environment with different structures and/or functions.

The model construction apparatus 120 may obtain input data 110 associated with an entity type 111 from a plurality of data sources. As illustrated in FIG. 1, for example, the input data 110 may include the entity type 111, an original attribute set 112 associated with the entity type 111, and a group of knowledge items 113 associated with the entity type 111. Examples of the entity type 111 may be such as a character, a film, an appliance, or a place. The attribute set 112 may include such as a group of attributes which are associated with the entity type 111 and not classified or processed. Taking that the entity type is the character as an example, attributes which are associated with the character and not classified or processed may include such as height, stature, weight, kilogram, age, wife, love and the like, in which, a plurality of attributes with a same semantics may be included (such as, a "height" and a "stature" of the character, a "weight" and a "kilogram" of the character, a "wife" and a "love" of the character). The knowledge item 113 may include a plurality of sentences associated with the entity type 111 and having a subject-predicate object (SPO) structure (the knowledge item with the subject-predicate object structure below will be abbreviated as "SPO"). For example, "the wife of SanZhang is SiLi" (in which, "SanZhang" and "SiLi" are the names of two persons, "SanZhang" is the subject, "wife" is the predicate, and "SiLi" is the object); "the love of SanZhang is SiLi" ("SanZhang" is the subject, "love" is the predicate, and "SiLi" is the object); and "the height of WuWang is 176cm" (in which, "WuWang" is the name of a person, "WuWang" is the subject, "height" is the predicate, and "176cm" is the object), and the like.

Although the input data 110 in FIG. 1 is illustrated to be associated with the entity type 111 merely, it should be understood that, this is for illustration purposes only and is not intended to limit the scope of the disclosure. In some embodiments, the model construction apparatus 120 may obtain corresponding input data associated with a plurality of entity types from a plurality of data resources. The model construction apparatus 120 may divide the obtained input data based on the entity types, to obtain input data associated with each type entity type.

As illustrated in FIG. 1, the model construction apparatus 120 may identify the plurality of attributes with a same semantics in the attribute set 112 (such as, "height" and "stature", the "weight" and the "kilogram" of the character, and the "wife" and the "love" of the character). By aligning the plurality of attributes with the same semantics in the attribute set 112 to a same attribute (that is, utilizing a same attribute to represent the plurality of attributes with the same semantics), the model construction apparatus 120 may generate an attribute set 131 associated with the entity type 111, such that any two attributes in the attribute set 131 have difference semantics. For example, the model construction apparatus 120 may align the attribute "height" and the attribute "stature" to a same attribute "height", align the attribute "weight" and the attribute "kilogram" to the same attribute "weight", align the attribute "wife" and the attribute "love" to the same attribute "wife", and the like. The model construction apparatus 120 may construct a data model 130 particular to the entity type 111 based on the entity type 111 and each attribute in the attribute set 131.

FIG. 2 is a flow chart illustrating a method 200 for constructing a data model according to embodiments of the present disclosure. For example, the method 200 may be executed by the model constructing apparatus 120 illustrated in FIG. 1. Detailed description will be made to the method 200 below with reference to FIG. 1. It should be understood that, the method 200 may also include actions at addition blocks not illustrated and/or blocks which may be omitted. The scope of the present disclosure is not limited herein.

At block 210, the model construction apparatus 120 obtains a first attribute set associated with the entity type.

In some embodiments, the first attribute set may be such as the original attribute set 112 illustrated in FIG. 1, i.e., an attribute set which is received from a plurality of data sources and is not classified or processed. Additionally or alternatively, in some embodiments, the data construction model 120 may further divide the original attribute set 112 illustrated in FIG. 1 (also called "a third attribute set" in the present disclosure) into a plurality of subsets based on an attribute similarity, and determine one of the plurality of subsets as the first attribute set.

In some embodiments, the model construction apparatus 120 may perform clustering on the original attribute set 112, to divide the original attribute set 112 into the plurality of subsets. For example, the model construction apparatus 120 may perform the clustering on the original attribute set 112 by utilizing a graph cluster algorithm based on Markov cluster algorithm. Comparing with a conventional text cluster algorithm, the graph cluster algorithm utilizes similarity characteristics of more dimensions, thus solving a cluster problem of a character string with a shorter length better. Additionally or alternatively, in some embodiments, the model construction apparatus 120 may perform the clustering on the original attribute set 112 by utilizing a graph cluster algorithm of the hierarchical clustering algorithm. The above merely lists a few examples of clustering algorithms that may be used by the model construction apparatus 120. It should be understood that, the model construction apparatus 120 may divide the original attribute set 112 into the plurality of subsets by utilizing any method known or to be developed, and does not limit to the methods illustrated above.

At block 220, the model construction apparatus 120 aligns a plurality of attributes with a same semantics in the first attribute set to a same attribute, to generate a second attribute set associated with the entity type. Attributes in the second attribute set having different semantics.

In some embodiments, the model construction apparatus 120 may combine the entity type with each attribute in the first attribute set, to generate a plurality of type-attribute pairs. Taking that the entity type is a character as an example, examples of the generated type-attribute pairs may be "character-height", "character-stature", "character-weight", "character- kilogram", and the like. For any two type-attribute pairs (which are also called as "a first type-attribute pair" and "a second type-attribute pair", such as the "character-weight" and the "character- kilogram) in the plurality of type-attributes, the model construction apparatus 120 may determine whether the first type-attribute pair has a same semantics with the second type-attribute pair.

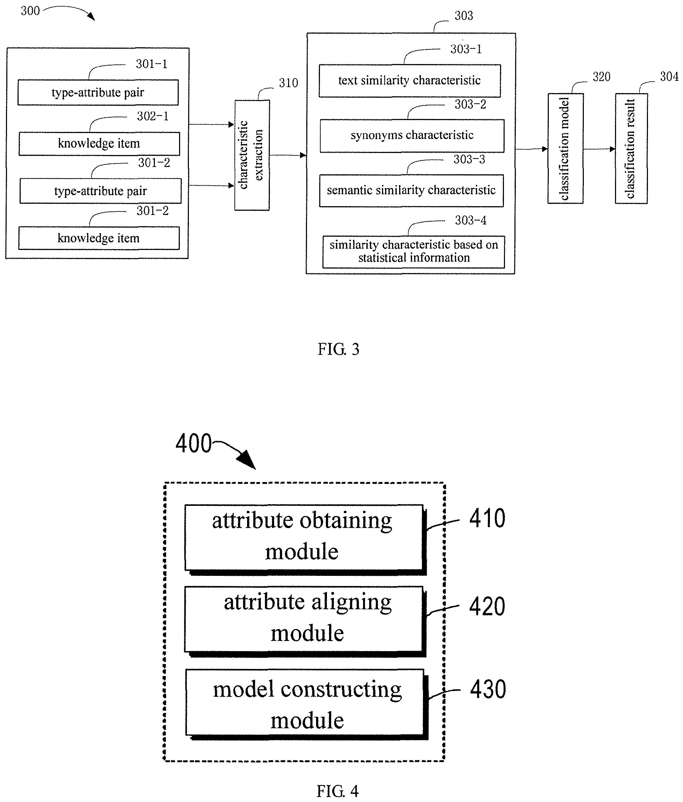

FIG. 3 is a block diagram illustrating an exemplary module 300 for determining whether a first type attribute has a same semantics as a second type attribute according to embodiments of the present disclosure. In some embodiments, the module 300 may be implemented as a part of the model construction apparatus 120 illustrated in FIG. 1. As illustrated in FIG. 3, the module 300 may generally include a characteristic extraction unit 310 and a classification model 320.

In some embodiments, the characteristic extraction unit 310 may obtain a first type-attribute pair 301-1 and a second type-attribute pair 301-2, and obtain a first group of knowledge items 302-1 associated with the first type-attribute 301-1 and a second group of knowledge items 302-2 associated with the second type-attribute 301-2 from a knowledge item 113 with a SPO structure illustrated in FIG. 1. In order to determine whether the first type-attribute 301-1 has a same semantic as the second type-attribute 301-2, the characteristic extraction unit 310 may exact a plurality of similarity characteristics 303 between the first type-attribute pair 301-1 and the second type-attribute pair 301-2. For example, the plurality of similarity characteristics 303 may include at least one of: a first similarity characteristic 303-1 indicating a text similarity between the first type-attribute pair 301-1 and the second type-attribute pair 301-2; a second similarity characteristic 303-2 indicating whether the first type-attribute pair 301-1 and the second type-attribute pair 301-2 are synonyms in a semantic dictionary; a third similarity characteristic 303-3 indicating a semantic similarity between the first type-attribute pair 301-1 and the second type-attribute pair 301-2; and a fourth similarity characteristic 303-4 obtained by performing a statistical analysis on a first group of knowledge items associated with the first type-attribute pair 301-1 and a second group of knowledge items associated with the second type-attribute pair 301-2.

In some embodiments, the text similarity between the first type-attribute pair 301-1 and the second type-attribute pair 301-2 may be measured by utilizing a jaccard similarity coefficient between the first type-attribute pair 301-1 and the second type-attribute pair 301-2. For example, the larger the jaccard similarity coefficient, the higher the similarity between both the type-attribute pairs. In some embodiments, the second similarity characteristic 303-2 may such as indicate whether the first type-attribute pair 301-1 and the second type-attribute pair 301-2 are synonyms in one or more semantic dictionaries (such as, a wordnet dictionary).

The semantic similarity between the first type-attribute pair 301-1 and the second type-attribute pair 301-2 may be measured in a plurality of ways. In some embodiments, the characteristic extraction unit 310 may determine a query similarity between the first attribute in the first type-attribute pair 301-1 and the second attribute in the second type-attribute pair 301-2 as the third similarity characteristic 303-3 measuring the semantic similarity between the first type-attribute pair 301-1 and the second type-attribute pair 301-2. For example, the characteristic extraction unit 310 may determine the first attribute and the second attribute as a query keyword, and determine the query similarity between the first attribute and the second attribute by determining a similarity between query results of the first attribute and the second attribute. Additionally or alternatively, in some embodiments, the characteristic extraction unit 310 may transform the first type-attribute pair 301-1 and the second type-attribute pair 301-2 into two vectors by utilizing a bag of word model, and determine the semantic similarity by calculating a cosine distance between the two vectors. Additionally or alternatively, in some embodiments, the characteristic extraction unit 310 may transform the first type-attribute pair 301-1 and the second type-attribute pair 301-2 into two vectors by utilizing a generalized regression neural network (GRNN) model, and determine the semantic similarity by calculating a cosine distance between the two vectors..Additionally or alternatively, in some embodiments, the characteristic extraction unit 310 may transform the first type-attribute pair 301-1 and the second type-attribute pair 301-2 into two vectors based on a query clicking characteristic associated with the first attribute in the first type-attribute pair 301-1 and a query clicking characteristic associated with the second attribute in the second type-attribute pair 301-2, and determine the semantic similarity by calculating a cosine distance between the two vectors. Additionally or alternatively, in some embodiments, the characteristic extraction unit 310 may determine the semantic similarity between the first type-attribute pair 301-1 and the second type-attribute pair 301-2 by utilizing a semantic classification model trained based on a supervised learning method. Additionally or alternatively, in some embodiments, the characteristic extraction unit 310 may transform the first type-attribute pair 301-1 and the second type-attribute pair 301-2 into two vectors by utilizing a skip-gram model, and determine the semantic similarity between both the type-attribute pairs by calculating a cosine distance between the two vectors.

The above merely lists a few examples for determining the third similarity characteristic 303-3 indicating the semantic similarity between the first type-attribute pair 301-1 and the second type-attribute pair 301-2. It should be understood that, the characteristic extraction unit 310 may utilize any method known or to be developed to determine the third similarity characteristic 303-3 indicating the semantic similarity between the first type-attribute pair 301-1 and the second type-attribute pair 301-2, and does not limit to these methods illustrated above.

In some embodiments, the characteristic extraction unit 310 may also obtain the fourth similarity characteristic between the first type-attribute pair 301-1 and the second type-attribute pair 301-2 by performing the statistical analysis on the first group of knowledge items 302-1 associated with the first type-attribute pair 301-1 and the second group of knowledge items 302-2 associated with the second type-attribute pair 301-2. For example, the characteristic extraction unit 310 may determine various types of statistical information based on the first group of knowledge items 302-1 associated with the first type-attribute pair 301-1 and the second group of knowledge items 302-2 associated with the second type-attribute pair 301-2. The statistical information may include such as subject-object co-occurrence information. The subject-object co-occurrence information described herein refers to that modifiers in two SPO structures are same and objects in the two SPO structures have are same. For example, "the wife of SanZhang is SiLi" and "the love of SanZhang is SiLi". The subject-object co-occurrence information may indicate that there is a higher probability that the two subjects (such as "wife" and "love") in the two subject-predicate object structures have a same semantics. Additionally or alternatively, the statistical information may also include information of an object type. The object type described herein refers to a superordinate word of the object in SPO. When the two object types in the two SPO structures are same, it may be indicated that there is a higher probability that the two subjects in the two SPO structures have a same semantics. Additionally or alternatively, the statistical information may also include such as information of a subject keyword, that is, a result obtained by comparing subjects not having the superordinate word in the two SPO structures. Additionally or alternatively, the statistical information may also include homology information. For example, when the two SPO structures come from a same data resource and relate to a same entity, the statistical information may indicate that there is a higher probability that two predicates (P) in the two SPO structures have different same semantics. The model construction apparatus 120 may determine the fourth similarity characteristic 303-4 between the first type-attribute pair 301-1 and the second type-attribute pair 301-2 based on the statistical information.

The above merely lists a few examples for determining the fourth similarity characteristic 303-4 a SPO statistical similarity between the first type-attribute pair 301-1 and the second type-attribute pair 301-2 based on the statistical information. It should be understood that, the model construction apparatus 120 may utilize any method known or to be developed to determine the fourth similarity characteristic 303-4 indicating the SPO statistical similarity between the first type-attribute pair 301-1 and the second type-attribute pair 301-2, and do not limit to the methods illustrated above.

In some embodiments, the plurality of extracted similarity characteristics 303 between the first type-attribute pair 301-1 and the second type-attribute pair 301-2 may be provided for a classification model 320, to determine whether the first type-attribute pair 301-1 has the same semantics as the second type-attribute pair 301-2. For example, the classification model 320 may be a trained support vector machine (SVM) model.

In some embodiments, the SVM model 320 for determining whether the first type-attribute pair 301-1 has the same semantics as the second type-attribute pair 301-2 may be trained in advance and provided for the model construction apparatus 120. Training data sets for training the SVM model may be obtained by a combination of clustering and manual annotation. For example, type-attribute pairs of a plurality of specific entity types (such as, a character, an appliance, a place and the like) may be used as the training data for training the SVM model. Before the manual annotation is performed on these type-attribute pairs, the clustering may be performed on these type-attribute pairs by utilizing the clustering algorithms. When the manual annotation is performed, the clustered training data set may be provided for a plurality of annotation personnel to mark type-attribute pairs with a same semantics in the clustered training data set. In this way, the accuracy of marking may be ensured by synthesizing marking results from the plurality of annotation personnel. When the SVM model is trained, the selected characteristics may be any similarity characteristic described above, including but not limited to: a text similarity characteristic, a semantics similarity characteristic (including: a query similarity, a Bow similarity, a GRNN similarity, a query clicking similarity, a semantic similarity obtained by a semantic similarity model, a skip-gram similarity, etc), a statistical similarity (which is obtained by performing the statistical analysis on the SPO data), and the like.

In this way, the trained classification model 320 may determine whether the first type-attribute pair 301-1 has the same semantics with the second type attribute-pair 301-2 based on the plurality of similarity characteristics 303 between the first type-attribute pair 301-1 and the second type attribute-pair 301-2, which is illustrated by a classification result 304 in FIG. 3.

Additionally or alternatively, in some embodiments, the model construction apparatus 120 may further perform optimization on the classification result 304 of the classification model 320 based on a preset rule. For example, when the classification model 320 determines that the first type-attribute pair 301-1 has the same semantics with the second type attribute-pair 301-2, the model construction apparatus 120 may further determine whether a score (such as, a score indicated by the second similarity characteristic described above) of the semantic similarity between the first type-attribute pair 301-1 and the second type attribute-pair 301-2 exceeds a preset threshold. When the classification model 320 determines that the score of the semantic similarity between the first type-attribute pair 301-1 and the second type attribute-pair 301-2 exceeds the preset threshold, the model construction apparatus 120 may determine that the first type-attribute pair 301-1 has the same semantics with the second type attribute-pair 301-2. In some embodiments, the model construction apparatus 120 may perform filtering on the classification result 304 based on a combination of one or more preset rules, thus further providing the accuracy of the classification result. Additionally or alternatively, in some embodiments, the model construction apparatus 120 may provide the classification result 304 with the user for verification, and perform the optimization on the classification result 304 based on a verification result fed back by the user, thus further improving the accuracy of the classification result.

In some embodiments, when it is determined that the first type-attribute pair has the same semantics with the second type attribute-pair, the model construction apparatus 120 may align a first attribute (i.e., "height") in the first type-attribute pair (such as, "character-height") and a second attribute (i.e., "stature") in the second type attribute-pair (such as, "character-stature") to a same attribute. For example, the model construction apparatus 120 may align the first attribute and the second attribute which have the same semantics to one of the first attribute and the second attribute. Alternatively, the model construction apparatus 120 may align the first attribute and the second attribute which have the same semantics to another attribute, such as an attribute which may be different from the first attribute and the second attribute. In this way, the model construction apparatus 120 may generate a second attribute set (such as, the attribute set 131 illustrated in FIG. 1) associated with an entity type, to ensure that attributes in the second attribute set have different semantics.

Returning to FIG. 2, at block 230, the model construction apparatus 120 constructs a data model associated with the entity type based on the entity type and the second attribute set. For example, the model construction apparatus 120 may combine the entity type with the attributes in the second attribute set to obtain corresponding type-attribute pairs. Each type-attribute pair corresponds to a schema associated with the entity type.

It can be seen from the above description that embodiments of the present disclosure use the machine learning model to identify synonyms attributes with different expressions in data from different sources. Since the procedure for determining the synonyms attributes uses rich characteristics of various dimensions, embodiments of the present disclosure may achieve a high accuracy and a high robustness. By aligning attributes with the same semantics automatically, embodiments of the present disclosure may construct the data model efficiently while reducing labor costs effectively.

FIG. 4 is a block diagram illustrating an apparatus 400 for constructing a data model according to embodiments of the present disclosure. The apparatus 400 may be configured to implement the model construction apparatus 120 illustrated in FIG. 1. As illustrated in FIG. 4, the apparatus may include an attribute obtaining module 410, an attribute aligning module 420, and a model constructing module 430. The attribute obtaining module 410 is configured to obtain a first attribute set associated with an entity type. The attribute aligning module 420 is configured to align a plurality of attributes with a same semantics in the first attribute set to a same attribute, to generate a second attribute set associated with the entity type, attributes in the second attribute set having different semantics. The model constructing module 430 is configured to construct the data model associated with the entity type based on the entity type and the second attribute set.

In some embodiments, the attribute obtaining module 410 includes an attribute obtaining unit, a subset dividing unit and a first determining unit. The attribute obtaining unit is configured to obtain a third attribute set associated with the entity type. The subset dividing unit is configured to divide the third attribute set into a plurality of subsets based on an attribute similarity. The first determining unit is configured to determine one of the plurality of subsets as the first attribute set.

In some embodiments, the subset dividing unit is further configured to perform cluster on the third attribute set, to divide the third attribute set into the plurality of subsets.

In some embodiments, the attribute aligning module 420 includes: a first combining unit, a second combining unit, a second determining unit and an attribute align unit. The first combining unit is configured to combine the entity type with a first attribute in the first attribute set, to obtain a first type-attribute pair. The second combining unit is configured to combine the entity type with a second attribute different from the first attribute in the first attribute set, to obtain a second type-attribute pair. The second determining unit, configured to determine whether the first type-attribute pair has a same semantics with the second type-attribute pair. The attribute align unit is configured to align the first attribute to the second attribute in response to determining that the first type-attribute pair has the same semantics as the second type-attribute pair.

In some embodiments, the second determining unit is further configured to: extract a plurality of similarity characteristics between the first type-attribute pair and the second type-attribute pair; and determine whether the first type-attribute pair has the same semantics with the second type attribute-pair based on the plurality of similarity characteristics.

In some embodiments, the plurality of similarity characteristics include at least one of: a first similarity characteristic indicating a text similarity between the first type-attribute pair and the second type-attribute pair; a second similarity characteristic indicating whether the first type-attribute pair and the second type-attribute pair are synonyms in a semantic dictionary; a third similarity characteristic indicating a semantic similarity between the first type-attribute pair and the second type-attribute pair; and a fourth similarity characteristic obtained by performing a statistical analysis on a first group of knowledge items associated with the first type-attribute pair and a second group of knowledge items associated with the second type-attribute pair.

In some embodiments, the second determining unit is further configured to utilize a classification model trained to determine whether the first type-attribute pair has the same semantics as the second type-attribute pair.

In some embodiments, the classification model is a trained support vector machine (SVM) model.

It should be understood that, each module in the apparatus 400 respectively corresponds to each action at each block in the method 200 illustrated in FIG. 2, and has a same function as a corresponding operation and feature in the method 200, and the specific details are not elaborated herein.

In addition, these modules and/or units illustrated in FIG. 4 may be implemented by utilizing various ways, including software, hardware, firmware or any combination thereof. In some embodiments, one or more units may be implemented by using the software and/or firmware, such as machine-executable instructions stored in the storage medium. In addition to or instead of machine-executable instructions, a part or all of the units in the apparatus 400 may be implemented at least in part by one or more hardware logic components. By way of example, and not limitation, exemplary types of hardware logic components that can be used include field-programmable gate arrays (FPGAs), application-specific integrated circuits (ASICs), application specific standard products (ASSPs), systems-on-chip (SOC), and complex programmable logic devices (CPLDs), and so on.

These modules and/or units illustrated in FIG. 4 may be implemented partly or all as hardware modules, software modules, firmware modules or any combination thereof. Particularly, in some embodiments, the procedure, method or process described above may be implemented by hardware in a storage system or a host corresponding to the storage system or other computing devices independent of the storage system.

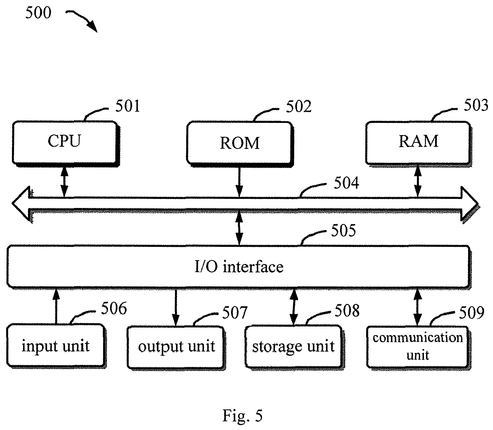

FIG. 5 is a block diagram illustrating an exemplary device 500 capable of implementing embodiments of the present disclosure. The device 500 may be configured as the computing device 120 for constructing a data model illustrated in FIG. 1. As illustrated in FIG. 5, the device 500 includes a center processing unit (CPU) 501. The CPU 501 may execute various appropriate actions and processes according to computer program instructions stored in a read only memory (ROM) 502 or computer program instructions loaded to a random access memory (RAM) 503 from a storage unit 508. The RAM 503 may also store various programs and date required by the device 500. The CPU 501, the ROM 502, and the RAM 503 may be connected to each other via a bus 504. An input/output (I/O) interface 505 is also connected to the bus 504.

A plurality of components in the device 500 are connected to the I/O interface 505, including: an input unit 506 such as a keyboard, a mouse; an output unit 507 such as various types of displays, loudspeakers; a storage unit 508 such as a magnetic disk, an optical disk; and a communication unit 509, such as a network card, a modem, a wireless communication transceiver. The communication unit 509 allows the device 500 to exchange information/data with other devices over a computer network such as the Internet and/or various telecommunication networks.

The processing unit 501 executes the above-mentioned methods and processes, such as the method 200. For example, in some implementations, the method 200 may be implemented as a computer software program. The computer software program is tangibly contained a machine readable medium, such as the storage unit 508. In some implementations, a part or all of the computer programs may be loaded and/or installed on the device 500 through the ROM 502 and/or the communication unit 509. When the computer programs are loaded to the RAM 503 and are executed by the CPU 501, one or more blocks of the method 200 described above may be executed. Alternatively, in other embodiments, the CPU 501 may be configured to execute the method 200 in other appropriate ways (such as, by means of hardware).

The functions described herein may be executed at least partially by one or more hardware logic components. For example, without not limitation, exemplary types of hardware logic components that may be used include: a field programmable gate array (FPGA), an application specific integrated circuit (ASIC), an application specific standard product (ASSP), a system on chip (SOC), a complex programmable logic device (CPLD) and the like.

Program codes for implementing the method of the present disclosure may be written in any combination of one or more programming languages. These program codes may be provided to a processor or a controller of a general purpose computer, a special purpose computer or other programmable data processing device, such that the functions/operations specified in the flowcharts and/or the block diagrams are implemented when these program codes are executed by the processor or the controller. These program codes may execute entirely on a machine, partly on a machine, partially on the machine as a stand-alone software package and partially on a remote machine or entirely on a remote machine or entirely on a server.

In the context of the present disclosure, the machine-readable medium may be a tangible medium that may contain or store a program to be used by or in connection with an instruction execution system, apparatus, or device. The machine-readable medium may be a machine-readable signal medium or a machine-readable storage medium. The machine-readable medium may include, but not limit to, an electronic, magnetic, optical, electromagnetic, infrared, or semiconductor system, apparatus, or device, or any suitable combination of the foregoing. More specific examples of the machine-readable storage medium may include electrical connections based on one or more wires, a portable computer disk, a hard disk, a RAM, a ROM, an erasable programmable read-only memory (EPROM or flash memory), an optical fiber, a portable compact disk read-only memory (CD-ROM), an optical storage, a magnetic storage device, or any suitable combination of the foregoing.

In addition, although the operations are depicted in a particular order, it should be understood to require that such operations are executed in the particular order illustrated in the drawings or in a sequential order, or that all illustrated operations should be executed to achieve the desired result. Multitasking and parallel processing may be advantageous in certain circumstances. Likewise, although several specific implementation details are included in the above discussion, these should not be construed as limitation of the scope of the present disclosure. Certain features described in the context of separate implementations may also be implemented in combination in a single implementation. On the contrary, various features described in the context of the single implementation may also be implemented in a plurality of implementations, either individually or in any suitable sub-combination.

Although the subject matter has been described in language specific to structural features and/or methodological acts, it should be understood that the subject matter defined in the appended claims is not limited to the specific features or acts described above. Instead, the specific features and acts described above are merely exemplary forms of implementing the claims.

## Claims

1. A method for constructing a data model, comprising:
obtaining (210) a first attribute set associated with an entity type;
aligning (220) a plurality of attributes with a same semantics in the first attribute set to a same attribute, to generate a second attribute set associated with the entity type, attributes in the second attribute set having different semantics;
constructing (230) the data model associated with the entity type based on the entity type and the second attribute set.

2. The method of claim 1, wherein, obtaining (210) the first attribute set associated with the entity type comprises:
obtaining a third attribute set associated with the entity type;
dividing the third attribute set into a plurality of subsets based on an attribute similarity; and
determining one of the plurality of subsets as the first attribute set.

3. The method of claim 2, wherein, dividing the third attribute set into the plurality of subsets comprises:
performing clustering on the third attribute set, to divide the third attribute set into the plurality of subsets.

4. The method of one of claims 1 to 3, wherein, aligning (220) the plurality of attributes with the same semantics in the first attribute set to the same attribute comprises:
combining the entity type with a first attribute in the first attribute set, to obtain a first type-attribute pair;
combining the entity type with a second attribute different from the first attribute in the first attribute set, to obtain a second type-attribute pair;
determining whether the first type-attribute pair has a same semantics with the second type-attribute pair; and
aligning the first attribute to the second attribute in response to determining that the first type-attribute pair has the same semantics as the second type-attribute pair.

5. The method of claim 4, wherein, determining whether the first type-attribute pair has the same semantics as the second type-attribute pair comprises:
extracting a plurality of similarity characteristics between the first type-attribute pair and the second type-attribute pair; and
determining whether the first type-attribute pair has the same semantics with the second type-attribute pair based on the plurality of similarity characteristics.

6. The method of claim 5, wherein, the plurality of similarity characteristics comprise at least one of:
a first similarity characteristic indicating a text similarity between the first type-attribute pair and the second type-attribute pair;
a second similarity characteristic indicating whether the first type-attribute pair and the second type-attribute pair are synonyms in a semantic dictionary;
a third similarity characteristic indicating a semantic similarity between the first type-attribute pair and the second type-attribute pair; and
a fourth similarity characteristic obtained by performing a statistical analysis on a first group of knowledge items associated with the first type-attribute pair and a second group of knowledge items associated with the second type-attribute pair.

7. The method of claim 4, wherein, determining whether the first type-attribute pair has the same semantics as the second type-attribute pair comprises:
utilizing a classification model to determine whether the first type-attribute pair has the same semantics as the second type-attribute pair.

8. The method of claim 7, wherein, the classification model is a trained support vector machine (SVM) model.

9. An apparatus (400) for constructing a data model, comprising:
an attribute obtaining module (410), configured to obtain a first attribute set associated with an entity type;
an attribute aligning module (420), configured to align a plurality of attributes with a same semantics in the first attribute set to a same attribute, to generate a second attribute set associated with the entity type, attributes in the second attribute set having different semantics;
a model constructing module (430), configured to construct the data model associated with the entity type based on the entity type and the second attribute set.

10. The apparatus (400) of claim 9, wherein, the attribute obtaining module (410) comprises:
an attribute obtaining unit, configured to obtain a third attribute set associated with the entity type;
a subset dividing unit, configured to divide the third attribute set into a plurality of subsets based on an attribute similarity; and
a first determining unit, configured to determine one of the plurality of subsets as the first attribute set.

11. The apparatus (400) of claim 9 or 10, wherein, the subset dividing unit is further configured to:
perform cluster on the third attribute set, to divide the third attribute set into the plurality of subsets.

12. The apparatus (400) of one of claims 9 to 11, wherein, the attribute aligning module (420) comprises:
a first combining unit, configured to combine the entity type with a first attribute in the first attribute set, to obtain a first type-attribute pair;
a second combining unit, configured to combine the entity type with a second attribute different from the first attribute in the first attribute set, to obtain a second type-attribute pair;
a second determining unit, configured to determine whether the first type-attribute pair has a same semantics with the second type-attribute pair; and
an attribute aligning unit, configured to align the first attribute to the second attribute in response to determining that the first type-attribute pair has the same semantics as the second type-attribute pair.

13. The apparatus (400) of claim 12, wherein, the second determining unit is further configured to:
extract a plurality of similarity characteristics between the first type-attribute pair and the second type-attribute pair; and
determine whether the first type-attribute pair has the same semantics with the second type attribute-pair based on the plurality of similarity characteristics.

14. The apparatus (400) of claim 13, wherein, the plurality of similarity characteristics comprise at least one of:
a first similarity characteristic indicating a text similarity between the first type-attribute pair and the second type-attribute pair;
a second similarity characteristic indicating whether the first type-attribute pair and the second type-attribute pair are synonyms in a semantic dictionary;
a third similarity characteristic indicating a semantic similarity between the first type-attribute pair and the second type-attribute pair; and
a fourth similarity characteristic obtained by performing a statistical analysis on a first group of knowledge items associated with the first type-attribute pair and a second group of knowledge items associated with the second type-attribute pair.

15. A computer readable storage medium having a computer program stored thereon, wherein, the program is configured to implement the method according to any one of claims 1-8 when executed by the processor.
